# EUROPEAN PATENT SPECIFICATION

(11) **EP 2 762 364 B1**
(45) Date of publication and mention of the grant of the patent: **26.04.2017**
(21) Application number: 13153526.2
(22) Date of filing: 31.01.2013
(51) Int. Cl.: B60R 7/04, B60R 11/02

(54) **FLAT PANEL DISPLAY ARRANGEMENT IN A VEHICLE DASHBOARD**
FLACHBILDSCHIRMANORDNUNG IN EINEM FAHRZEUGARMATURENBRETT
DISPOSITIF D'AFFICHAGE À ÉCRAN PLAT SUR TABLEAU DE BORD DE VÉHICULE

(43) Date of publication of application: 06.08.2014
(73) Proprietor: Delphi Technologies, Inc., Troy, MI 48007 (US)
(72) Inventor: Reischl, Erik, 55765 Birkenfeld (DE); Lipka, Janusz, 02-066 WARSZAWA (PL); Melfried, Sebastian, 30-838 Kraków (PL)
(74) Representative: Delphi France SAS

(56) References cited:
- DE-A1- 10 063 190
- DE-A1-102008 005 907
- DE-U1-202004 018 363
- US-A1- 2010 264 683
- US-A1- 2011 121 598

## Description

### FIELD OF THE INVENTION

The present invention generally relates to a display arrangement in the dashboard of an automotive vehicle comprising an electronic visual display for displaying information to the driver.

### BACKGROUND OF THE INVENTION

The use of electronic visual displays such as flat panels is now conventional in automotive vehicles to display to the user a variety of information relating to radio stations and other media, navigation, telephone or car settings, etc.

The multi-purpose display is generally installed in the upper central region of the dashboard, so that it can be easily read by the driver, but also by the other car passengers.

In a number of designs, the display system is arranged to be moveable from a hidden, park position to an apparent position so that, when not in use, it can be hidden from view, for protection purposes and for dissuading thieves. A drive mechanism may e.g. be provided to pull the display out of a slot in the dashboard when driving, and bringing it back into the dashboard slot when the engine is turned off.

In alternative designs, a moveable cover is associated with the display, that can be operated so as to completely cover and hide the display unit, or in a position showing partly or entirely the display surface.

Still alternative designs are shown in DE 10063190, disclosing a dashboard with a display according to the preamble of claim 1, and US 2011/0121598.

### OBJECT OF THE INVENTION

The object of the present invention is to provide an alternative type of design for such information display arrangement.

This object is achieved by a dashboard with an electronic visual display arrangement as claimed in claim 1.

### SUMMARY OF THE INVENTION

According to the present invention, a dashboard with electronic visual display arrangement for a vehicle is specified in claim 1. The present invention thus proposes a design wherein the display panel acts as cover for an inner compartment located behind the display in the first position. This functionality implies that the first position should be the default position when the engine is off, to hide the compartment, and hence that the display should be apparent in this first position. Accordingly, when the display panel is in the first position, the dashboard will look similar to dashboards with fixed display panels.

However, the user may selectively actuate the drive mechanism to move the display panel in the second position, in order to access the hidden compartment, which may be a storage box, contain a CD or DVD unit, or connectors, etc. Preferably, the display is moved upward from the first position into the second position. This can be a simple linear movement, or a more complex movement.

In practice, the display panel may be apparent to the driver in all positions, and is designed to be functional in all positions, i.e. it can display information in the first and second positions.

Conveniently, the main frame may be fixedly mounted in an opening in the dashboard. The inner dashboard compartment may be affixed to the main frame, so that it extends inside the dashboard and has its with its front end turned towards the passenger compartment.

In the first position, the display preferably rests against the main frame and obstructs the opening in the dashboard. If desired, the drive mechanism may be configured to move the display from the first position to an intermediate position, wherein the display panel is pivoted about its lower edge, generally in the forward direction. This can be done e.g. to improve the readability of the display as compared to the first position which may be inclined backwards for the purpose of integration in the dashboard.

To allow both a pivoting and upward movement of the display relative to the main frame, the display may be slideably mounted (upwardly) on a rear cover, while the rear cover itself is hinged to the main frame, so that in the first position the pivot axis of the rear cover is in the vicinity of the lower edge of the display.

In one embodiment, the drive mechanism comprises an arm associated with a linear propeller unit. The arm has pins cooperating with a cam member including a first cam profile for causing the display to pivot about the pivot axis and a second cam profile for upwardly guiding the arm, the arm being able to drag the display panel along when moving upwards.

The linear propeller unit is preferably mounted to the rear cover associated with the display, while the arm is thus moveable with respect to the rear cover.

The linear propeller unit may comprise a propeller shaft with external thread, whereas the arm has a central opening with a corresponding inner threading.

Alternatively, the linear propeller unit may comprise a linear rack and the arm has a pinion meshing with the rack.

For stability purposes, the arm is guided at its extremities by guide slots in the lateral sides of the rear cover.

These and other preferred embodiments of the present inventions are recited in the appended dependent claims 2 to 9.

### BRIEF DESCRIPTION OF THE DRAWINGS

The present invention will now be described, by way of example, with reference to the accompanying drawings, in which:
FIG. 1: is a side view of an embodiment of the present electronic visual display arrangement, with the display in first position;
FIG. 2: is a side view of the display arrangement of Fig.1, with the display in intermediate position;
FIG. 3: is a side view of the display arrangement of Fig.1, with the display in second position;
FIG. 4: is a front perspective view of Fig.3;
FIG. 5: is a rear perspective view of the display and rear cover, with the drive mechanism, in the first position;
FIG. 6: is a rear perspective view of the display and rear cover with the drive mechanism, in the intermediate position;
FIG. 7: is a sectional view through the display and rear cover;
FIG. 8: is a partial view of the main frame, with the cam member in normal position;
FIG. 9: is a partial view of the main frame, with the cam member in safety position;
FIG. 10: is a rear perspective view of the display and rear cover with a different type of drive mechanism.

### DETAILED DESCRIPTION OF A PREFERRED EMBODIMENT

The present visual display arrangement for vehicle dashboard comprises a moveable display forming a kind of cover in order to hide or block access to an inner dashboard compartment, extending inside the dashboard. The display is moveably arranged so that:
- in a first position, it hides and blocks access to the inner compartment located behind the display;
- in a second position of the display, it is offset from the front side of the inner compartment and hence allows access the inner compartment.

In both positions, the display surface is apparent to the user.

The display arrangement may generally be delivered as an assembly comprising a main frame for mounting the display in a dashboard, the display being moveably connected to the main frame. A drive mechanism is adapted to selectively move the display between a first position and a second position relative to the inner dashboard compartment, respectively to the main frame.

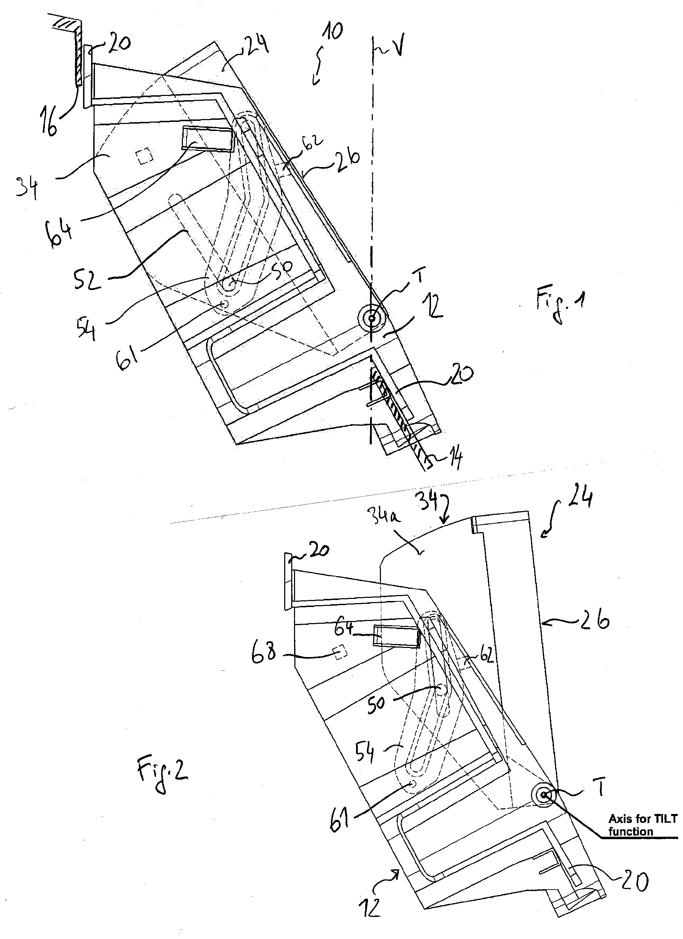

Referring to Figs. 1 to 4, a preferred embodiment of the present display arrangement 10 comprises a main frame 12 for fixing the display arrangement to the dashboard structure 14, preferably in an opening 16 therein that has dimensions corresponding to those of the frame 12, whereby the main frame 12 is mostly hidden after assembly. The frame 12 has two upright brackets 18 with connecting lugs 20, and two or more transverse members 22 connecting the brackets 18.

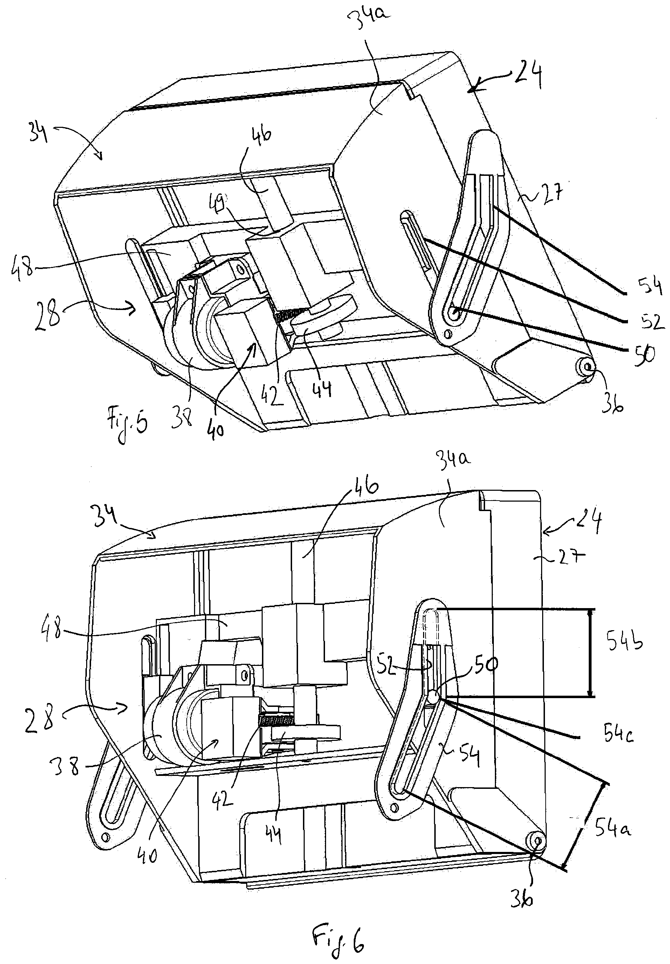

The electronic visual display 24 advantageously comprises a flat panel having a display surface 26; the flat panel being, e.g., rectangular in shape and surrounded by a casing 27. The display panel 24 is moveably connected to the frame 12 and can be moved into two or more positions by the drive mechanism generally indicated 28 (Figs. 5-6), in particular to change the position of the display 24 relative to the inner dashboard compartment 30.

Preferably, the inner compartment 30 is affixed to the main frame 12. This inner compartment 30 has a front end with an opening 32 that is turned towards the passenger compartment when mounted in the dashboard 14. In the shown embodiment the compartment 30 is empty and open towards the passenger compartment, serving as storage box for keys, candy etc. However it may alternatively contain a CD/DVD drive, connectors or other that would then be accessible from the compartment's front end.

As it appears from the Figures, the display 24 can be positioned by the drive mechanism 28 as follows:
- Fig.1: the display 24 is in a first position, in which it blocks access to-and hides-the inner compartment. It is preferably the default position when the engine is off.

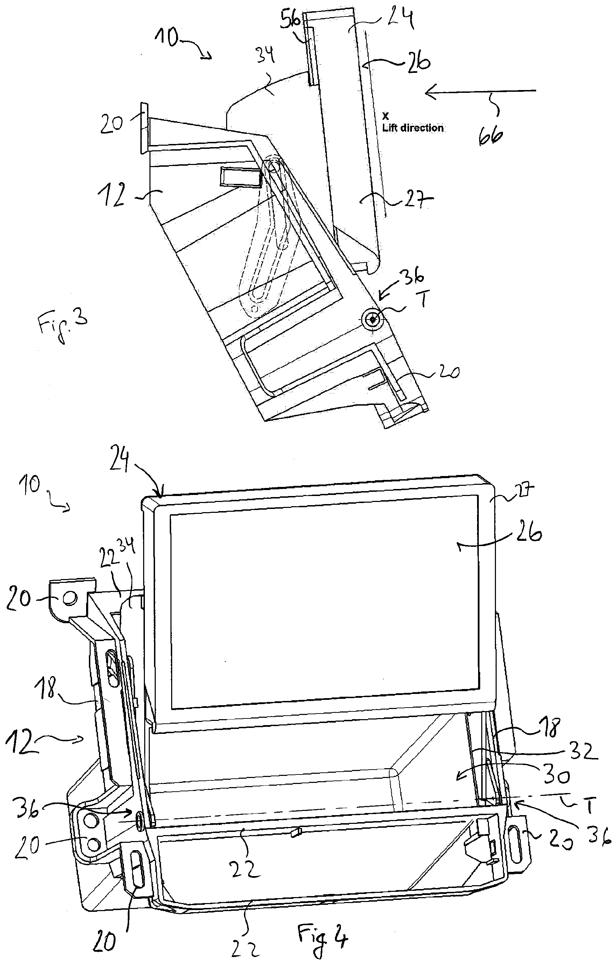

- In Fig.4 the display 24 is in a second position, wherein the display 24 has been offset from the first position (Fig.1) to give access to the inner compartment 30, i.e. to clear partially or entirely the opening 32 of the inner compartment 30.

It may be noticed that in practice, such display arrangement will generally be installed in the upper dashboard region, where the dashboard panel is downwardly oriented from the windshield.

Therefore, as can be understood from Fig.1, in the first position the display 24 may be inclined backwards relative to the driver/passengers (and to the vertical V). In such position the display 24 can be considered to lay flat in the dashboard 14 and lies against the main frame 12. This position may therefore also be called the "rest" or "park" position.

To improve readability, it may be desirable to bring the display 24 closer to the vertical. This can be done by tilting forward the display 24 about its lower edge, arriving at the position illustrated in Fig.2 and referred to as "tilted" or "intermediate" position.

It may be noticed that in both the rest and intermediate positions, the display 24 hides and blocks access to the inner compartment 30 from the passenger compartment (i.e. from the right hand side of the display 24 in Figs. 1-3).

In the second position (Figs.3 & 4), the display 24 has been moved upward from the intermediate position, preferably following a linear upward movement, in particular vertical or closely vertical. The amplitude of the upward displacement is set in accordance with the size of the front side / opening 32 of the compartment 30.

A variety of drive mechanisms may be contemplated for driving/guiding the display 24 into the above-described positions.

A first variant of such design will now be described with reference to Figs. 5 to 7. Reference sign 34 indicates a display cover that is hingedly mounted to the main frame 14. The cover 34 has a hood shape and carries the display 24. The cover 34 is fixed at its bottom to the main frame 12 by two pivots 36 aligned with the pivot or "tilt" axis T.

An electric motor 38 with reduction gear set 40 is fixed to the display cover 34, at the rear of the display panel 24, to actuate a propeller unit. More specifically, an output gear 42 of the gear set 40 meshes with an input gear 44 rotationally integral with a propeller shaft 46 having an external threading. The propeller shaft 46 is arranged so be capable of raising the display 24 off the frame from its rest position (Fig.1.), and hence allows closing or opening the access to the hidden compartment 30.

Reference sign 48 indicates an arm extending crosswise in the cover 34. The central region of the arm 48 has a threaded propeller channel 49 traversed by shaft 46 and meshing therewith. Energizing electric motor 38 thus drives output gear 42 and causes shaft 46 to rotate about itself, also causing arm 48 to move along the shaft 46. Hence, proper energizing of motor 38 will cause the arm to ascend or descend along propeller shaft 46.

For stability purposes, the arm 48 is guided during its travel along the shaft 46 by means of two pins 50 that are engaged into respective guide slots 52. The guide slots 52 are provided in the lateral flanks 34a of cover 34 and extend parallel to the propeller shaft 46.

It shall be appreciated that the pins 50 further each cooperate with a respective cam member 54 mounted to the main frame 12, that has two joining cam profiles 54a and 54b for guiding the display in the tilting movement and in the subsequent lifting movement.

In the park position of Figs 1 and 5, the arm 48 is at the lower end of propeller shaft 46 and the pins 50 are positioned at one extremity in the cam member 54, more precisely at the extremity of cam profile 54a. Energizing motor 38 will cause arm 48 to move along propeller shaft 46. Cam member 54 being fixed and the display cover 34 being hinged about pivots 36, pins 50 will move along slot 52 and cam profile 54a simultaneously, causing the cover 34 to move forward from the rest position (Fig.1), hence tilting forward the display 24, which is carried by cover 34. When the drive mechanism moves along cam profile 54a, the display (24) is only tilted, not lifted.

The two cam profiles 54a and 54b are preferably linear, and their intersection 54c is designed to corresponds to the intermediate, tilted position of Fig.2. The second cam profile 54b is preferably configured so as to be aligned with guide slot 52 when the pins 50 are at point 54c, i.e. in the intermediate position of Fig.2.

It may be noticed here that the display 24 is moveably mounted with respect to the cover 34. In particular, display 24 is slideable on the cover 34 in a plane parallel to the display surface 26. For this purpose, the display 24 may comprise linear grooves 56 in its lateral casing sides that are engaged by respective tongues (not shown) of the display cover 34.

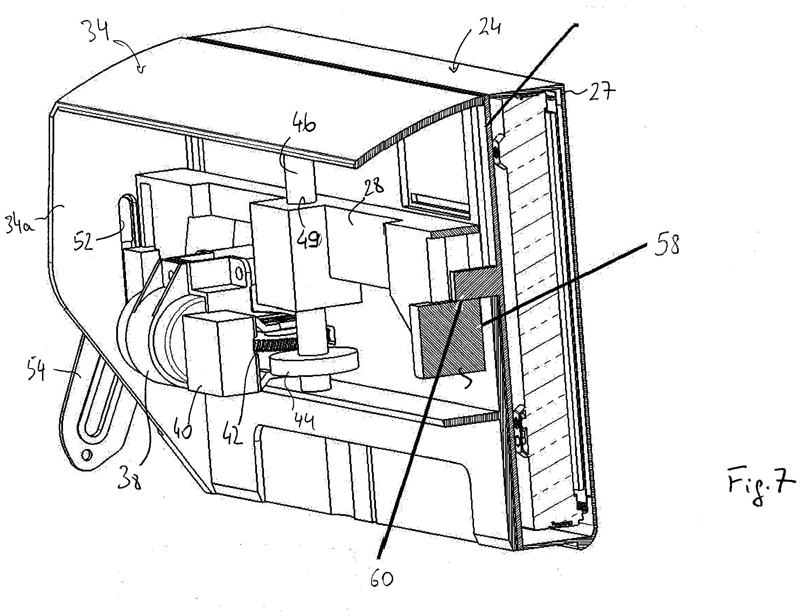

As it can be understood from Figs.2 and 3, the tongue and groove 56 arrangement allows raising the display from the frame 12. This raising movement of display 24 is advantageously also achieved by the propeller mechanism. At point 54c, arm 28 comes into contact with the display 24: each extremity 58 of arm 28 comes into abutment with a follower flange 60 extending from the rear of the display 24 into the cover 34, see Fig.7. From point 54c, moving the arm 48 further along shaft 46 causes pins 50 to move along respective cam profiles 54b, and the arm 48 carries along the flange 60 and thus lifts up the display 24. The amplitude of upward displacement of the display 24 then depends on the configuration of the shaft 46, on the cam profile 54b and on the position of flange 60.

For its operation, drive mechanism comprises a control circuit that will energize the electric motors when and as required. The drive mechanism may be selectively actuated by the driver/passenger by pressing a button located e.g. on the dashboard or on the casing 37. As it has been understood, the sequential actuation of the button would typically cyclically bring the display 24 from the first to the intermediate position, then to the second position, then back to the intermediate position and finally to the first position.

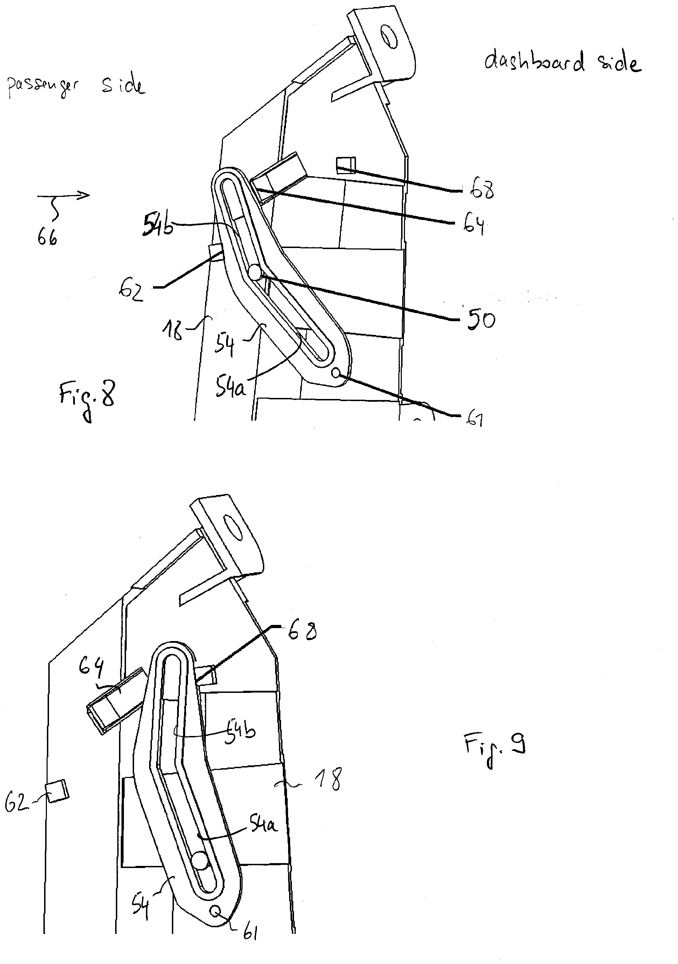

It shall be appreciated that a particular mounting of the cam member is advantageously implemented for safety reasons, as will now be explained with respect to Figs.8 and 9.

The cam member 54 is fixed to the frame 12 about the extremity of cam profile 54a by a pivot 61 and is maintained in place, in the region of cam profile 54b, between a first endstop 62 and a flexible tongue 64. In normal operation, the cam member 54 is fixed (doesn't move) relative to the frame member 12.

As it will be understood, when the display 24 is in the second position, so-called "misuse forces" may happen to be applied to the display 24, tending to push it towards the dashboard (see arrow 66 in Fig.3). For example, the driver or a passenger may manually push on the display 24 to attempt to manually tilt it backwards, or incidentally hit the display in the case of an accident.

The present design allows coping with this situation without damaging the drive mechanism. In case a misuse force tending to push the display 24 backwards, such force will be transmitted to the cam member 54 by the moving arm pins 50, forcing cam member 54 against flexible tongue 64. If the misuse force exceeds a predetermined (design/calibrated) threshold, the flexible tongue 64 will move out of the way and the cam member 54 pivot in a safety position against a second endstop 68. The position of this second endstop 68 is selected so that the display 24 can be pivoted backwards against the frame 12.

When the motor will be next actuated with the pins 50 in the first cam profile 54a corresponding to the tilting portion, the force exerted by the pins on the cam member 54 will cause the latter to pivot back against the first stop 62.

Hence, in normal use the cam member 54 is regarded as fixed, although it can move in exceptional cases where a misuse force is applied to the display.

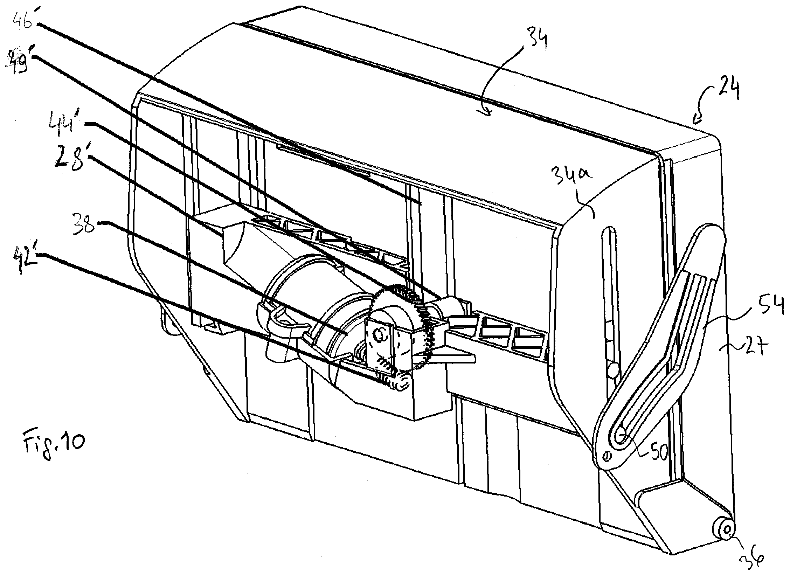

Fig.10 shows another embodiment, which differs from the previous embodiment by the design of the propeller unit. Therefore, similar or like components are indicated by same reference signs.

The propeller unit here employs a rack 46' instead of propeller shaft 46. The arm 28' thus has a pinion 49' meshing with rack 46' in order to move along the latter. Pinion 50' is rotationally integral with a worm wheel 44' meshing with a worm 42' driven by electric motor 38 (motor 38 being here supported by arm 28).

For stability, arm 28 advantageously includes an additional pin 50' at each extremity, that slides in slot 52' only. As compared to the previous embodiment, the length of slot 52' must be increased by the distance between pins 50 and 50'.

To protect the drive mechanism against misuse forces and allow pushing the display downward manually, the worm gear 44' is preferably of the double-start type, without self-locking function.

## Claims

1. A dashboard with an electronic visual display arrangement for a vehicle, said dashboard comprising:
a electronic visual display (24) having a display surface (26);
a main frame (12) for mounting said display (24) in a dashboard (14), said display being moveably connected to said main frame;
a drive mechanism adapted to selectively move said display (24) between a first position and a second position relative to an inner dashboard compartment (30) in such a way that:
when in said first position, said display (24) is positioned, with its display surface (26) apparent, to hide and block access to said inner dashboard compartment (30); and
in said second position of said display (24), the said inner compartment (30) is accessible from the passenger compartment
wherein said main frame (12) is fixedly mounted in an opening (16) in said dashboard; and said inner compartment (30) is affixed to said main frame (12), extending inside the dashboard and with its front end towards the passenger compartment;
**characterized in that**
said drive mechanism is configured to:
- move said display (24) from said first position to an intermediate position, wherein said display (24) is pivoted about its lower edge, preferably forward;
- move said display (24) from said first position or from said intermediate position to said second position, by describing an upward, linear movement;
and **in that** said drive mechanism comprises an arm (28; 28') associated with a linear propeller unit, said arm having pins (50; 50') cooperating with a cam member (54) including a first cam profile (54a) for causing the display (24) to pivot about an axis and a second cam profile (54b) for upwardly guiding said arm, said arm (28; 28') carrying said display (24) along when moving upwards.

2. The dashboard according to claim 1, wherein said arm (24) is moveably mounted to a rear cover (34) associated with said display (24), and said display (24) is slideably supported by said rear cover (34).

3. The dashboard according to claim 1 or 2, wherein said display (24) has a rear flange member (60) protruding in said rear cover (34) that is pushed upwards by said arm (24) when guided in said second cam profile (54b).

4. The dashboard according to claim 2 or 3, wherein said rear cover (34) is hinged to the main frame (12), so that in said first position the pivot axis of said rear cover (34) is in the vicinity of the lower edge of said display (24).

5. The dashboard according to claim 1, 2, 3 or 4, wherein said linear propeller unit comprises a propeller shaft (46) with external thread, and said arm (28) has a body with an opening (49) of corresponding inner threading.

6. The dashboard according to claim 1, 2, 3 or 4, wherein said linear propeller unit comprises a rack (46') and said arm (28') has a pinion (49') meshing with said rack (46') for moving along said rack (46').

7. The dashboard according to any one of claims 1 to 6, wherein
each cam member (54) is mounted to the main frame (12) and maintained in place at one end by a pivot (61) and at the other end between one endstop (62) and a flexible endstop (64); and
the flexible endstop (64) is designed to allow pivoting of said cam member (54) to a second endstop (68) in case the force applied by said cam member (54) on said flexible endstop (68) exceeds a predetermined threshold.

8. The dashboard according to any one of the preceding claims, wherein said display is apparent in said first, second and intermediate positions.

9. The dashboard according to any one of the preceding claims, wherein said inner compartment is a storage box, contains a DVD/CD unit or connectors, or other electronic or media device.

## Patentansprüche

1. Ein Armaturenbrett mit einer elektronischen visuellen Anzeigenanordnung für ein Fahrzeug, wobei das Armaturenbrett aufweist:
eine elektronische visuelle Anzeige (24) mit einer Anzeigenoberfläche (26);
einen Hauptrahmen (12) zum Anbringen der Anzeige (24) in einem Armaturenbrett (14), wobei die Anzeige bewegbar mit dem Hauptrahmen verbunden ist;
einen Antriebsmechanismus, der ausgebildet ist zum selektiven Bewegen der Anzeige (24) zwischen einer ersten Position und einer zweiten Position relativ zu einem inneren Armaturenbrettfach (30) derart, dass:
wenn in der ersten Position, die Anzeige (24) positioniert ist, mit ihrer Anzeigenoberfläche (26) sichtbar, zum Verstecken und Blockieren eines Zugriffs auf das innere Armaturenbrettfach (30); und
in der zweiten Position der Anzeige (24), das innere Fach (30) von dem Fahrgastraum aus zugänglich ist,
wobei der Hauptrahmen (12) in einer Öffnung (16) in dem Armaturenbrett fest angebracht ist; und das innere Fach (30) an dem Hauptrahmen (12) befestigt ist, sich im Inneren des Armaturenbretts und mit seinem vorderen Ende in Richtung des Fahrgastraums erstreckend;
**dadurch gekennzeichnet, dass**
der Antriebsmechanismus konfiguriert ist zum:
- Bewegen der Anzeige (24) von der ersten Position in eine Zwischenposition, wobei die Anzeige (24) um ihre untere Kante geschwenkt wird, vorzugsweise nach vorne;
- Bewegen der Anzeige (24) von der ersten Position oder von der Zwischenposition in die zweite Position durch Beschreiben einer nach oben gerichteten, linearen Bewegung;
und dadurch, dass der Antriebsmechanismus einen Arm (28; 28') aufweist, der mit einer linearen Antriebseinheit assoziiert ist, wobei der Arm Stifte (50; 50') hat, die mit einem Nockenelement (54) zusammenarbeiten mit einem ersten Nockenprofil (54a), um zu veranlassen, dass die Anzeige (24) um eine Achse schwenkt, und einem zweiten Nockenprofil (54b) zum Führen des Arms nach oben, wobei der Arm (28; 28') die Anzeige (24) bei der Bewegung nach oben mitnimmt.

2. Das Armaturenbrett gemäß Anspruch 1, wobei der Arm (24) bewegbar an einer hinteren Abdeckung (34) angebracht ist, die mit der Anzeige (24) assoziiert ist, und die Anzeige (24) durch die hintere Abdeckung (34) verschiebbar unterstützt wird.

3. Das Armaturenbrett gemäß Anspruch 1 oder 2, wobei die Anzeige (24) ein hinteres Flanschelement (60) hat, das in der hinteren Abdeckung (34) hervorsteht, das durch den Arm (24) bei einem Führen in dem zweiten Nockenprofil (54b) nach oben gedrückt wird.

4. Das Armaturenbrett gemäß Anspruch 2 oder 3, wobei die hintere Abdeckung (34) an dem Hauptrahmen (12) angehängt ist, so dass in der ersten Position die Schwenkachse der hinteren Abdeckung (34) in der Nähe der unteren Kante der Anzeige (24) ist.

5. Das Armaturenbrett gemäß Anspruch 1, 2, 3 oder 4, wobei die lineare Antriebseinheit eine Antriebswelle (46) mit Außengewinde aufweist und der Arm (28) einen Körper mit einer Öffnung (49) eines entsprechenden Innengewindes hat.

6. Das Armaturenbrett gemäß Anspruch 1, 2, 3 oder 4, wobei die lineare Antriebseinheit eine Zahnstange (46') aufweist und der Arm (28') ein Ritzel (49') hat, das mit der Zahnstange (46') in Eingriff ist zur Bewegung entlang der Zahnstange (46').

7. Das Armaturenbrett gemäß einem der Ansprüche 1 bis 6, wobei jedes Nockenelement (54) an dem Hauptrahmen (12) angebracht ist und an einem Ende durch einen Drehzapfen (61) und an dem anderen Ende zwischen einem Endanschlag (62) und einem flexiblen Endanschlag (64) gehalten wird; und
der flexible Endanschlag (64) ausgebildet ist, ein Schwenken des Nockenelements (54) zu einem zweiten Endanschlag (68) zu ermöglichen, wenn die Kraft, die durch das Nockenelement (54) auf den flexiblen Endanschlag (68) ausgeübt wird, eine vorgegebene Schwelle übersteigt.

8. Das Armaturenbrett gemäß einem der vorhergehenden Ansprüche, wobei die Anzeige in den ersten, zweiten und Zwischenpositionen sichtbar ist.

9. Das Armaturenbrett gemäß einem der vorhergehenden Ansprüche, wobei das innere Fach eine Aufbewahrungsbox ist, eine DVD/CD-Einheit oder Verbinder enthält oder eine andere elektronische oder Medienvorrichtung.

## Revendications

1. Tableau de bord avec un agencement d'affichage visuel électronique pour un véhicule,
ledit tableau de bord comprenant :
un affichage visuel électronique (24) ayant une surface d'affichage (26) ;
un cadre principal (12) pour monter ledit affichage (24) dans un tableau de bord (14), ledit affichage étend connecté de manière déplaçable audit cadre principal ;
un mécanisme d'entraînement adapté à déplacer sélectivement ledit affichage (24) entre une première position et une seconde position par rapport à un compartiment intérieur (30) du tableau de bord, d'une manière telle que :
lorsqu'il est dans ladite première position, ledit affichage (24) est positionné, avec sa surface d'affichage (26) apparente, pour dissimuler et bloquer l'accès audit compartiment intérieur (30) du tableau de bord ; et
dans ladite seconde position dudit affichage (24), ledit compartiment intérieur (30) est accessible depuis le compartiment passager dans lequel ledit cadre principal (12) est monté de manière fixe dans une ouverture (16) dans ledit tableau de bord ; et ledit compartiment intérieur (30) est fixé sur ledit cadre principal (12), en s'étendant à l'intérieur du tableau de bord et avec son extrémité frontale vers le compartiment passager ;
**caractérisé en ce que**
ledit mécanisme d'entraînement est configuré pour :
- déplacer ledit affichage (24) depuis ladite première position jusqu'à une position intermédiaire, de sorte que ledit affichage (24) est pivoté autour de son bord inférieur, de préférence vers l'avant ;
- déplacer ledit affichage (24) depuis ladite première position ou depuis ladite position intermédiaire jusqu'à ladite seconde position, en décrivant un mouvement linéaire vers le haut ;
et **en ce que** ledit mécanisme d'entraînement comprend un bras (28 ; 28') associé à une unité de propulsion linéaire, ledit bras ayant des tétons (50 ; 50') coopérant avec un élément formant came (54) incluant un premier profil de came (54a) pour amener l'affichage (24) à pivoter autour d'un axe et un second profil de came (54b) pour guider ledit bras vers le haut, ledit bras (28 ; 28') emportant ledit affichage (24) lorsqu'il se déplace vers le haut.

2. Tableau de bord selon la revendication 1, dans lequel ledit bras (24) est monté de façon déplaçable sur un couvercle arrière (34) associé avec ledit affichage (24), et ledit affichage (24) est supporté en coulissement par ledit couvercle arrière (34).

3. Tableau de bord selon la revendication 1 ou 2, dans lequel ledit affichage (24) possède un élément en bride arrière (60) qui se projette dans ledit couvercle arrière (34) et qui est poussé vers le haut par ledit bras (24) lorsqu'il est guidé dans ledit second profil de came (54b).

4. Tableau de bord selon la revendication 2 ou 3, dans lequel ledit couvercle arrière (34) est articulé au cadre principal (12), de sorte que dans ladite première position l'axe de pivotement dudit couvercle arrière (34) est au voisinage du bord inférieur dudit affichage (24).

5. Tableau de bord selon la revendication 1, 2, 3 ou 4, dans lequel ladite unité de propulsion linéaire comprend un arbre propulseur (46) avec un pas de vis extérieur, et ledit bras (28) possède un corps avec une ouverture (29) dotée d'un pas de vis intérieur correspondant.

6. Tableau de bord selon la revendication 1, 2, 3 ou 4, dans lequel ladite unité de propulsion linéaire comprend une crémaillère (46') et ledit bras (28') possède un pignon (49') en engrènement avec ladite crémaillère (46') pour se déplacer le long de ladite crémaillère (46').

7. Tableau de bord selon l'une quelconque des revendications 1 à 6, dans lequel
chaque élément de came (54) est monté sur le cadre principal (12) et maintenu en place à une extrémité par un pivot (61) et à l'autre extrémité entre une butée finale (62) et une butée finale flexible (64) ; et la butée finale flexible (64) est conçue pour permettre un pivotement dudit élément de came (54) vers une seconde butée finale (68) dans le cas où la force appliquée par ledit élément de came (54) sur ladite butée finale flexible (68) excède un seuil prédéterminé.

8. Tableau de bord selon l'une quelconque des revendications précédentes, dans lequel ledit affichage est apparent dans ladite première position, ladite seconde position et ladite position intermédiaire.

9. Tableau de bord selon l'une quelconque des revendications précédentes, dans lequel ledit compartiment intérieur est une boîte de stockage, contenant un lecteur DVD/CD ou des connecteurs, ou un autre dispositif électronique ou dispositif multimédia.
